# EUROPÄISCHE PATENTSCHRIFT

(11) **EP 3 707 737 B1**
(45) Veröffentlichungstag und Bekanntmachung des Hinweises auf die Patenterteilung: **17.08.2022**
(21) Anmeldenummer: 18803368.2
(22) Anmeldetag: 08.11.2018
(51) Int. Cl.: H01G 2/04, H01G 4/005, H01G 4/228, H01G 4/38, H01G 4/40, H01G 2/10, H01G 4/224, H01G 4/32, H02M 7/00

(54) **LEISTUNGSELEKTRONIKEINRICHTUNG**
POWER ELECTRONICS DEVICE
DISPOSITIF D'ÉLECTRONIQUE DE PUISSANCE

(30) Priorität: 10.11.2017 DE 102017126394
(43) Veröffentlichungstag der Anmeldung: 16.09.2020
(73) Patentinhaber: Valeo Siemens eAutomotive Germany GmbH, 91056 Erlangen (DE)
(72) Erfinder: SMIT, Arnoud, 91056 Erlangen (DE); ZITZMANN, Daniel, 91207 Lauf a.d. Pegnitz (DE); HOFMANN, Harald, 90471 Nürnberg (DE)
(74) Vertreter: Novembre, Christophe Adelphe
(86) Internationale Anmeldenummer: PCT/EP2018/080564
(87) Internationale Veröffentlichungsnummer: WO 2019/092077

(56) Entgegenhaltungen:
- DE-A1-102008 050 452
- DE-B4-102008 050 452
- US-A1- 2011 102 966

## Beschreibung

Die Erfindung betrifft eine Leistungselektronikeinrichtung, insbesondere zur Verwendung in Elektrofahrzeugen.

Nach dem Stand der Technik sind Leistungselektronikeinrichtungen, beispielsweise Ladeeinrichtungen für Energiespeicher, Inverter oder Gleichspannungswandler allgemein bekannt. Eine solche Leistungselektronikeinrichtung umfasst einen Gleichspannungszwischenkreis mit einem Zwischenkreiskondensator.

Bei Leistungselektronikeinrichtungen mit Gleichspannungszwischenkreis, welche beispielsweise für Anwendungen in Fahrzeugen mit kombiniertem oder ausschließlichem elektrischen Antrieb vorgesehen sind, kommen häufig sehr leistungsfähige Leistungshalbleiter oder Leistungshalbleitermodule zum Einsatz. Diese sind in der Lage, mittels teilweise komplexer Regelungsverfahren und geeigneter Ansteuerverfahren, große elektrische Leistungen mittels hoher Schaltgeschwindigkeiten bedarfsgerecht zu schalten. Das schnelle Schalten von hohen Strömen am Gleichspannungszwischenkreis führt in Kombination mit aufbaubedingten Induktivitäten, insbesondere Leitungsinduktivitäten, während eines Ausschaltvorgangs des Leistungshalbleiter bzw. Leistungshalbleitermodule jedoch oft zu unerwünschten Spannungsspitzen. Meist verursachen hochfrequente Schaltvorgänge der Leistungshalbleiter bzw. Leistungshalbleitermodule am Gleichspannungszwischenkreis aus noch Beeinträchtigungen der elektromagnetischen Verträglichkeit.

Es ist bekannt, diesen unerwünschten elektrischen Effekten mit dem Einsatz des Zwischenkreiskondensators im Gleichspannungszwischenkreis entgegenzuwirken. Entscheidend für den Erfolg dieser Maßnahme ist es insbesondere, dass mittels entsprechender Aufbau- und Verbindungstechnologien eine möglichst gute elektrische und mechanische Anbindung des Zwischenkreiskondensators an den Leistungshalbleiter bzw. die Leistungshalbleitermodule hergestellt wird.

Ein Zwischenkreiskondensator ist üblicherweise aus zwei einander gegenüberliegenden Elektrodenplatten gebildet, zwischen denen ein oder mehrere Wickel gehalten sind. Jeder Wickel weist zwei einander gegenüberliegende Stirnseiten auf, die durch Schoopierung elektrisch kontaktierbar sind. Die schoopierten Stirnflächen werden üblicherweise an die jeweilige Elektrodenplatte angelötet oder angeschweißt. Die Elektrodenplatte ihrerseits ist wiederum fest mit einer Stromschiene verbunden, welche ein Anschlusselement zur Verbindung mit einer externen Schaltung, Leitung oder dgl. aufweist. Bei bestimmten Ausführungsformen sind die Elektrodenplatte mit den dazwischen gehaltenen Wickeln sowie die Stromschienen mit Ausnahme der darin vorgesehenen Anschlusselemente mit einer Vergussmasse vergossen. Zwischenkreiskondensatoren werden von den Herstellern von Leistungselektronikeinrichtungen üblicherweise von Lieferanten zugekauft, welche die Zwischenkreiskondensatoren nach Vorgaben der Hersteller fertigen. Bei einer Änderung der Vorgabe eines Herstellers ist es also erforderlich, dass der Lieferant gesondert einen entsprechend angepassten Zwischenkreiskondensator fertigt. Das ist umständlich und aufwändig.

Die DE 10 2008 050452 A1 offenbart eine Kondensatoranordnung, mit einem Kondensator mit einer ersten Kontaktfläche und einer zweiten Kontaktfläche, wobei die erste und die zweite Kontaktfläche gegenüberliegend angeordnet sind; einem ersten Anschlussblech, das mit der ersten Kontaktfläche verbunden ist, wobei das erste Anschlussblech an einem Ende Fortsätze aufweist, die geeignet sind, um in Ausnehmungen eines ersten abgewinkelten Bereichs einer ersten Leistungsschiene eines Leistungselektronikmoduls einzugreifen; und einem zweiten Anschlussblech, das mit der zweiten Kontaktfläche verbunden ist, wobei das zweite Anschlussblech an einem Ende Fortsätze aufweist, die geeignet sind, um in Ausnehmungen eines ersten abgewinkelten Bereichs einer zweiten Leistungsschiene des Leistungselektronikmoduls einzugreifen, so dass der Kondensator direkt in dem Leistungselektronikmodul angeordnet sein kann. Die Anschlussbleche sind mit den Leistungsschienen durch eine Steckverbindung mittels der Fortsätze und den Ausnehmungen verbunden.

Die US 2011/102966 A1 offenbart einen vergossenen Kondensator mit einer Kondensatorelementanordnung, die ein erstes Kondensatorelement, ein zweites Kondensatorelement und eine Stromschiene, welche einen Anschluss aufweist und mit einer ersten Elektrode des ersten Kondensatorelements verfügt ist, umfasst. Das zweite Kondensatorelement ist mit der Stromschiene verfügt und mit dem ersten Kondensatorelement verbunden.

Aufgabe der Erfindung ist es, die Nachteile nach dem Stand der Technik zu beseitigen. Es soll insbesondere eine Leistungselektronikeinrichtung angegeben werden, welcher mit vermindertem Aufwand herstellbar ist.

Diese Aufgabe wird durch die Merkmale des Patentanspruchs 1 gelöst. Zweckmäßige Ausgestaltungen der Erfindung ergeben sich aus den Merkmalen der abhängigen Patentansprüche.

Bei dem Zwischenkreiskondensatormodul ist an zwei einander gegenüberliegenden Elektrodenplatten ein Wickel elektrisch leitend angebracht, wobei an jeder Elektrodenplatte mehrere erste Verbindungsmittel zur Herstellung einer Steckverbindung mit dazu korrespondierenden, an einer Stromschiene eines Leistungselektronikmoduls angebrachten zweiten Verbindungsmitteln vorgesehen sind.

Das Zwischenkreiskondensatormodul weist in Abweichung vom Stand der Technik keine Stromschienen auf. Es sind lediglich an jeder Elektrodenplatte erste Verbindungsmittel vorgesehen, welche zur Verbindung mit an den Stromschienen vorgesehenen zweiten Verbindungsmitteln geeignet sind. Damit ist es möglich, die Stromschienen mit den daran vorgesehen zweiten Verbindungsmitteln im Leistungselektronikmodul zu montieren und sodann in einem späteren Fertigungsschritt das Zwischenkreiskondensatormodul mittels einer einfachen Steckverbindung elektrisch leitend mit den Stromschienen zu verbinden.

Das Zwischenkreiskondensatormodul kann weitere an den Elektrodenplatten elektrisch leitend angebrachte Wickel aufweisen. Das Zwischenkreiskondensatormodul kann lieferantenseitig je nach Anforderung des Herstellers von Leistungselektronikeinrichtungen mit einer unterschiedlichen Anzahl an Wickeln und/oder Wickeln unterschiedlicher Eigenschaften versehen sein. Unabhängig davon können die Geometrie der Elektrodenplatten sowie die Anordnung und Ausbildung der ersten Verbindungsmittel beibehalten werden. Damit ist es herstellerseitig möglich, unter Beibehaltung der Montagegeometrie der am Leistungselektronikmodul angebrachten Stromschienen schnell und einfach Zwischenkreiskondensatormodule zu montieren, welche beispielsweise eine unterschiedliche Kapazität aufweisen. Seitens des Lieferanten entfällt der kosten- und zeitaufwändige Schritt der Montage der Stromschiene an die Elektrodenplatten. Abgesehen davon können derartige Zwischenkreiskondensatormodule auch in kleineren Einheiten lieferantenseitig vorgehalten werden, von denen dann auch mehrere herstellerseitig mittels der Steckverbindung auf die Stromschienen montiert werden können.

Nach einer besonders vorteilhaften Ausgestaltung ist das erste Verbindungsmittel einstückig mit der Elektrodenplatte ausgebildet. Das erste Verbindungsmittel kann beispielsweise mittels Stanz-, Laserschneid- und Biegetechnik in einem Stück mit der Elektrodenplatte hergestellt sein. Das erste Verbindungsmittel kann insbesondere nach Art einer zur Aufnahme eines Kontaktstifts geeigneten Buchse oder Lasche ausgebildet sein. Die Buchse oder Lasche kann beispielsweise eine Klemmfeder oder dgl. aufweisen.

Nach einer weiteren vorteilhaften Ausgestaltung sind in paralleler Anordnung ein aus den Elektrodenplatten gebildetes erstes Elektrodenplattenpaar mit dem dazwischen aufgenommenen ersten Wickel und ein aus zwei weiteren einander gegenüberliegenden Elektrodenplatten gebildetes zweites Elektrodenplattenpaar mit einem oder mehreren dazwischen aufgenommenen zweiten Wickeln vorgesehen Die vorgeschlagene Untergliederung des Zwischenkreiskondensatormoduls in ein erstes und ein zweites Elektrodenplattenpaar mit jeweils dazwischen gehaltenen Wickeln ermöglicht bei Beibehaltung einer vorgegebenen Geometrie eine Verminderung der zwischen den Elektrodenplatten aufgespannten Flächen. Infolgedessen wird eine Streu-Induktivität des Zwischenkreiskondensatormoduls herabgesetzt. Ein solches Zwischenkreiskondensatormodul eignet sich für besonders schnelle Schaltvorgänge.

Bei dem Leistungselektronikmodul mit zumindest zwei Stromschienen sind an jeder Stromschiene zweite Verbindungsmittel zur Herstellung der Steckverbindung mit den dazu korrespondierenden, an dem Zwischenkreiskondensatormodul angebrachten ersten Verbindungsmitteln vorgesehen.

Das Leistungselektronikmodul kann herstellerseitig vorteilhafterweise zunächst ohne das Zwischenkreiskondensatormodul hergestellt werden. Es kann in einem späteren Fertigungsschritt schnell und einfach durch Herstellung einer Steckverbindung mit dem Zwischenkreiskondensatormodul verbunden werden. Infolgedessen ist es beispielsweise möglich, die Stromschienen herstellerseitig so zu montieren, dass sie nahe an einer Kühleinrichtung angebracht oder unmittelbar in Kontakt mit einer Kühleinrichtung sind. Die Stromschienen können jeweils mit einer standardisierten Anordnung an zweiten Verbindungsmitteln versehen sein. Damit ist es möglich, einen oder mehrere geometrisch entsprechend angepasste Zwischenkreiskondensatormodule an den Stromschienen zu montieren.

Die Stromschienen können in einander gegenüberliegender Anordnung, insbesondere sandwichartig, montiert sein. Eine Stromschiene kann Durchbrechungen zum Durchführen der zweiten Verbindungsmittel der anderen Stromschiene aufweisen.

Nach einer vorteilhaften Ausgestaltung ist das zweite Verbindungsmittel nach Art eines sich von der Stromschiene erstreckenden Kontaktstifts ausgebildet, welcher reibschlüssig in das erste Verbindungsmittel einsteckbar ist. Der Begriff "Kontaktstift" ist vorliegend allgemein zu verstehen, d. h. es kann sich dabei auch um eine oder mehrere nebeneinander angeordnete Kontaktzungen handeln, welche beispielsweise in Draufsicht rechteckig, trapezförmig oder spitzzulaufend ausgebildet sind. Der Kontaktstift kann auch als Stift oder Rohrstutzen ausgebildet sein. Er kann im Querschnitt rund, quadratisch oder rechteckig sein.

Das zweite Verbindungsmittel ist zweckmäßigerweise einstückig mit der Stromschiene ausgebildet. Das zweite Verbindungsmittel kann beispielsweise mittels Stanzen, Laserschneiden und Umbiegen ausgebildet sein.

Die Stromschiene kann ein Anschlusselement zum Anschluss an eine Versorgungsleitung, eine Schaltung oder dgl. aufweisen. Es handelt sich dabei beispielsweise um eine Anschlussfahne mit einem Durchbruch zum Durchführen eines Befestigungselements, beispielsweise einer Schraube, eines Gewindebolzens oder dgl.

Bevorzugt ist das Leistungselektronikmodul als Ladeeinrichtung für einen elektrischen Energiespeicher, als Inverter oder als Gleichspannungswandler ausgebildet.

Bei der vorgeschlagenen Leistungselektronikeinrichtung ist das Zwischenkreiskondensatormodul mittels der Steckverbindung mit den Stromschienen des Leistungselektronikmoduls Eine solche Leistungselektronikeinrichtung lässt sich mit verringertem Aufwand herstellen. Er lässt sich - je nach Anforderung - auch mit mehreren Zwischenkreiskondensatormodulen gleicher oder unterschiedlicher Kapazität, Spannungsfestigkeit, Streuinduktivität und dgl. kombinieren. Ferner kann mit der vorgeschlagenen Trennung der Stromschienen vom Zwischenkreiskondensatormodul eine verbesserte Kühlung des Zwischenkreiskondensatormoduls erreicht werden. Die Stromschienen können herstellerseitig so im Leistungselektronikmodul angebracht werden, dass sie mit verbesserter Effizienz gekühlt werden können.

Die erfindungsgemäße Leistungselektronikeinrichtung kann ferner ein Deckelelement, welches die Wickel gasdicht einhaust umfassen. Das Deckelelement schützt die Wickel vor Feuchtigkeit und Wärme, die insbesondere beim Transport die Wickel schädigen kann. Besonders bevorzugt ist das Deckelelement verformbar, um einen Druckausgleich ohne Gasaustausch zwischen den im Inneren des Deckelelements aufgenommenen Wickeln und der Umgebung zu ermöglichen. Insbesondere kann so auf üblicherweise verwendete metallisierte Einwegfolien, in die herkömmliche Wickel beim Transport eingeschweißt werden, verzichtet werden.

Daneben kann die Leistungselektronikeinrichtung ein das Deckelelement gegenüber einer Stromschiene abdichtendes Dichtelement umfassen. Das Deckelelement kann dabei auf der Stromschiene aufliegen.

Nach dem Herstellen der Steckverbindung wird das zweite Verbindungsmittel verformt, so dass die Verbindung unlösbar wird, d. h. ohne eine Verformung oder Zerstörung der Verbindungsmittel nicht mehr lösbar ist.

Nachfolgend werden vorteilhafte Ausgestaltungen der Erfindung anhand der Zeichnungen näher erläutert. Es zeigen:
- Fig. 1: eine perspektivische Teilansicht einer ersten Leistungselektronikeinrichtung,
- Fig. 2: eine perspektivische Teilansicht einer zweiten Leistungselektronikeinrichtung,
- Fig. 3a: eine perspektivische geschnittene Ansicht erster und zweiter Verbindungsmittel in einer ersten Position,
- Fig. 3b: eine geschnittene Seitenansicht der ersten und zweiten Verbindungsmittel in der ersten Position,
- Fig. 3c: eine geschnittene perspektivische Ansicht der ersten und zweiten Verbindungsmittel in einer zweiten Position und
- Fig. 4: eine perspektivische Ansicht einer Leistungselektronikeinrichtung in einem montierten Zustand.

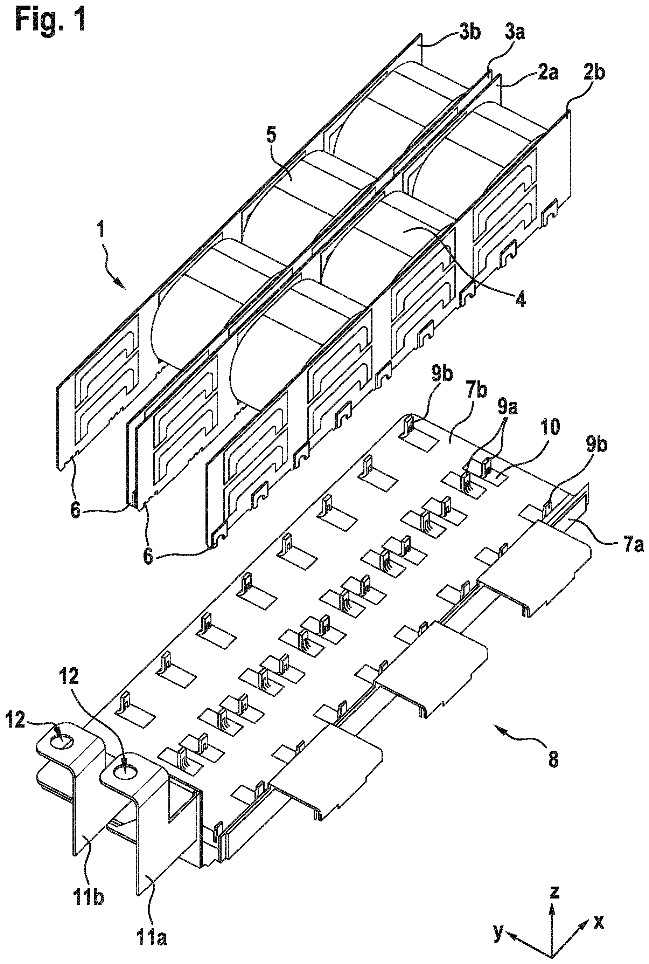

Fig. 1 zeigt ein allgemein mit dem Bezugszeichen 1 bezeichnetes Zwischenkreiskondensatormodul. Das Zwischenkreiskondensatormodul 1 weist eine erste Elektrodenplatte 2a und eine zweite Elektrodenplatte 2b, welche einander gegenüber liegen und ein erstes Elektrodenplattenpaar 2 bilden, sowie eine dritte Elektrodenplatte 3a und eine vierte Elektrodenplatte 3b auf, welche ebenfalls einander gegenüber liegen und ein zweites Elektrodenplattenpaar 3 bilden. Zwischen dem ersten Elektrodenplattenpaar 2 sind mehrere erste Wickel 4 und zwischen dem zweiten Elektrodenplattenpaar 3 zweite Wickel 5 angebracht. Die Wickel 4, 5 sind stirnseitig schoopiert. Mittels Löten, Schweißen oder einer anderen Verbindungstechnik sind die Wickel 4 mit den Elektrodenplatten 2a, 2b und die Wickel 5 mit den Elektrodenplatten 3a, 3b verbunden.

Die Elektrodenplatten 2a, 2b, 3a, 3b sind jeweils mit ersten Verbindungsmitteln 6 versehen. Bei den ersten Verbindungsmitteln 6 handelt es sich hier um einstückig mit den Elektrodenplatten 2a, 2b, 3a, 3b ausgebildete, umgebogene Laschen.

Fig. 1 zeigt ferner eine erste Stromschiene 7a und eine (hier teilweise verdeckte) zweite Stromschiene 7b eines Leistungselektronikmoduls 8. Die Stromschienen 7a, 7b sind sandwichartig voneinander elektrisch isoliert angeordnet. Von den Stromschienen 7a, 7b erstrecken sich zweite Verbindungsmittel 9a, 9b, welche nach Art einer Stecklasche ausgebildet sind. Die sich von der ersten Stromschiene 7a erstreckenden zweiten Verbindungsmittel 9a durchsetzen Durchbrüche 10 der zweiten Stromschiene 7b.

Die ersten Verbindungsmittel 6 und die zweiten Verbindungsmittel 9a, 9b sind korrespondierend zur Herstellung einer unlösbaren Steckverbindung ausgebildet. Eine Anordnung der ersten Verbindungsmittel 6 am Zwischenkreiskondensatormodul 1 ist korrespondierend zur Anordnung der zweiten Verbindungsmittel 9a, 9b an den Stromschienen 7a, 7b so dass zwischen sämtlichen ersten Verbindungsmitteln 6 und sämtlichen zweiten Verbindungsmitteln 9 beim Aufsetzen des Zwischenkreiskondensatormoduls 1 auf die Stromschienen 7a, 7b die Steckverbindung herstellbar ist.

Die erste Stromschiene 7a ist mit einem ersten Anschlusselement 11a verbunden. Die zweite Stromschiene 7b ist mit einem zweiten Anschlusselement 11b verbunden. Die Anschlusselemente 11a und 11b weisen jeweils einen Durchbruch 12 auf, durch welche beispielsweise Schrauben zur Verbindung mit Stromleitungen geführt werden können.

Die in Fig. 1 gezeigte Anordnung der Stromschienen 7a, 7b ist fester Bestandteil des Leistungselektronikmoduls 8. Das Zwischenkreiskondensatormodul 1 wird mittels der Steckverbindung mit dem Leistungselektronikmodul 8 zu einer Leistungselektronikeinrichtung 14 verbunden.

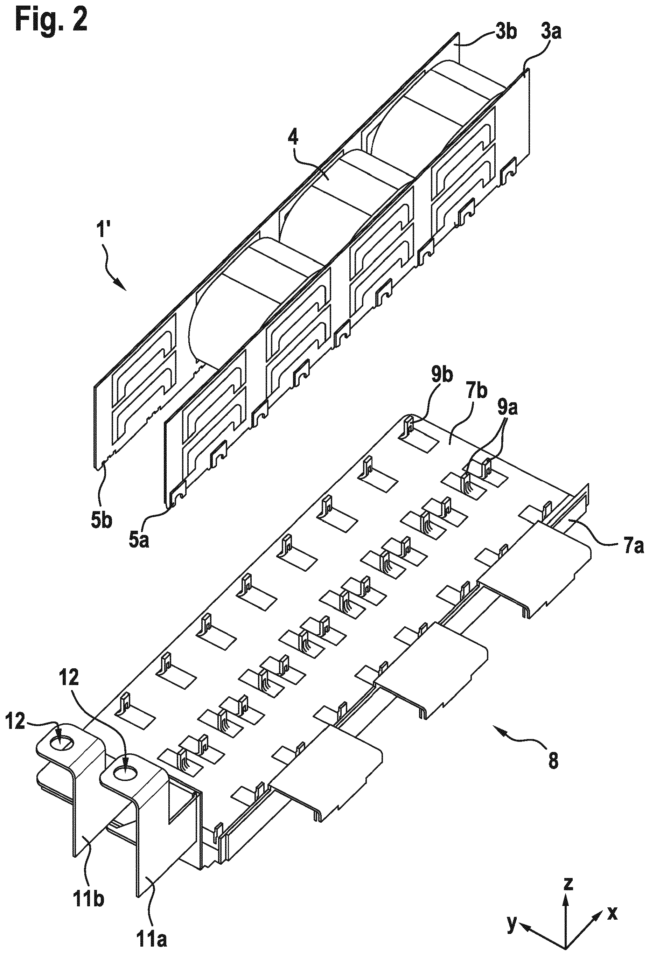

Wie insbesondere aus Fig. 2 ersichtlich ist, können bei gleichbleibender Ausbildung der Stromschienen 7a, 7b auch ein weiteres andersartig ausgestaltetes Zwischenkreiskondensatormodul 1', mit der ersten Stromschiene 7a und zweiten Stromschiene 7b, verbunden werden. Das weitere Zwischenkreiskondensatormodul 1' weist lediglich eine erste Elektrodenplatte 2a und eine zweite Elektrodenplatten 2b auf, die ein Elektrodenplattenpaar 2 bilden und zwischen denen mehrere erste Wickel 4 gehalten sind. Indem hinsichtlich der Anordnung und Ausbildung der Stromschienen 7a, 7b und der daran vorgesehenen zweiten Verbindungsmittel 9a, 9b das Leistungselektronikmodul 8 standardisiert ist, können damit hinsichtlich der Anordnung und Ausbildung der ersten Verbindungsmittel korrespondierend ausgebildete Zwischenkreiskondensatormodule 1, 1' ohne großen Aufwand mittels der Steckverbindung verbunden werden. Die Zwischenkreiskondensatormodule 1, 1' können allerdings hinsichtlich der Anzahl und Ausgestaltung der Elektrodenplatten 2a, 2b, 3a, 3b und der dazwischen gehaltenen Wickel 4, 5 unterschiedlich ausgestaltet sein. Damit ist es möglich, Zwischenkreiskondensatormodule 1, 1' unterschiedlicher Kapazität, Streuinduktivität oder dgl. mit dem Leistungselektronikmodul 8 zu kombinieren.

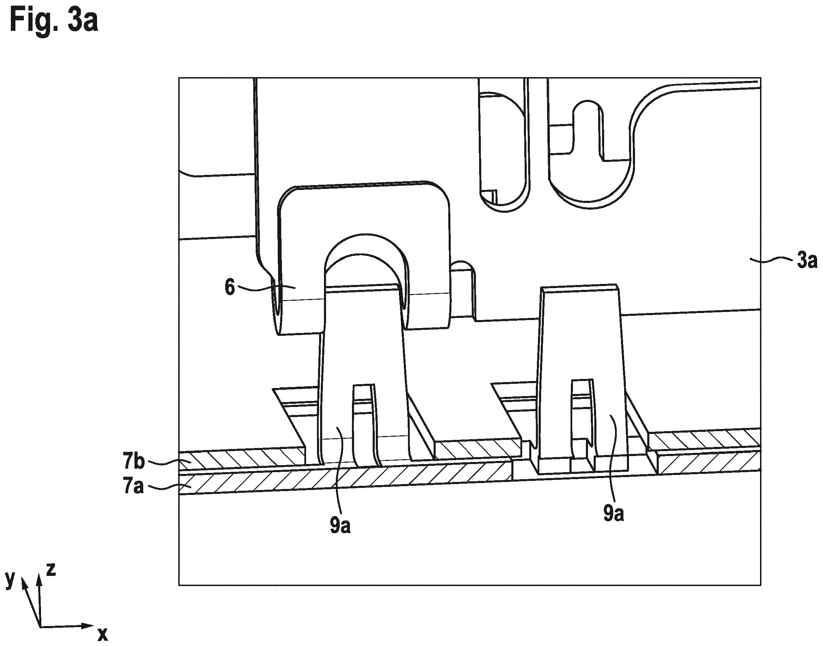

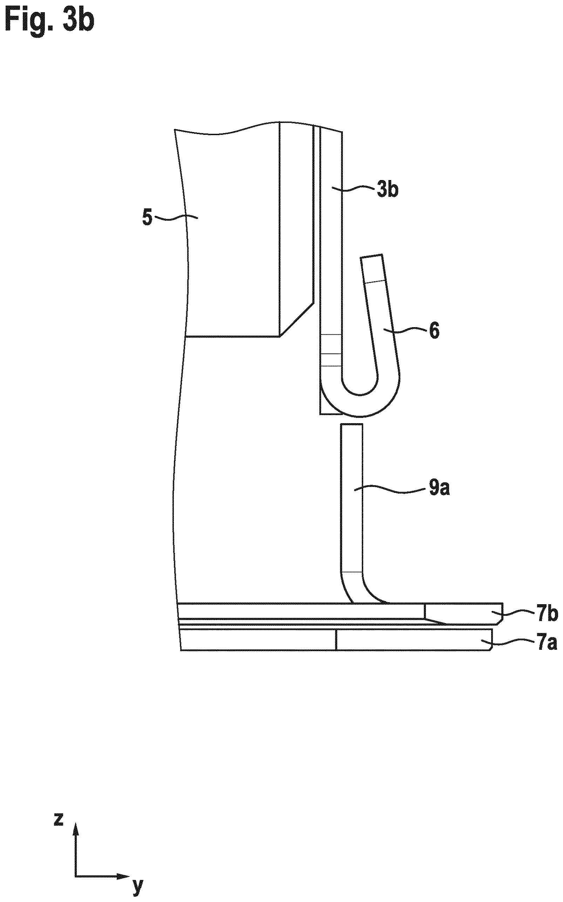

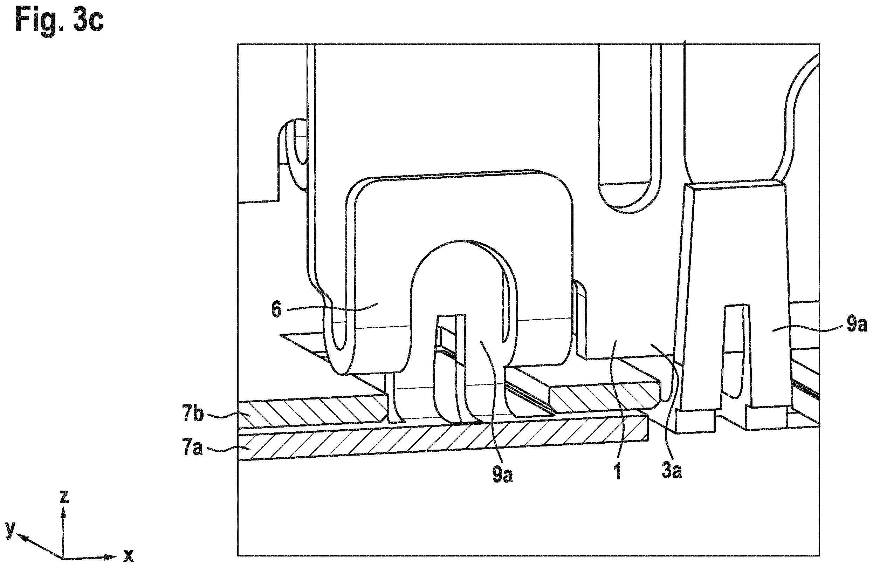

Fig. 3a zeigt eine perspektivische, geschnittene Ansicht eines an einer Elektrodenplatte (hier beispielhaft der dritten Elektrodenplatte 3a) angebrachten ersten Verbindungsmittels 6 sowie ein sich von einer Stromschiene (hier beispielhaft der ersten Stromschiene 7a) erstreckendes zweites Verbindungsmittel 9a in einer ersten Position vor einem Verbinden. Wie insbesondere in Zusammensicht mit einer in Fig. 3b gezeigten geschnittenen Seitenansicht ersichtlich ist, ist das erste Verbindungsmittel 6 hier nach Art einer umgebogenen Lasche gebildet, welche in einstückiger Ausbildung mit der ersten Elektrodenplatte 2a hergestellt ist. Das zweite Verbindungsmittel 9a besteht aus zwei sich von der ersten Stromschiene 7a erstreckenden Zungen, welche an einem freien Ende des ersten Verbindungsmittels 6 zusammenlaufen. Das erste Verbindungsmittel 6 ist in das als Lasche ausgebildete zweite Verbindungsmittel 9a reibschlüssig einsteckbar. Fig. 3c zeigt das Zwischenkreiskondensatormodul 1, welches mittels der Steckverbindung mit dem Leistungselektronikmodul 8 in einer zweiten Position verbunden ist, wobei das zweite Verbindungsmittel 9a zur Herstellung der unlösbaren Verbindung verformt worden ist.

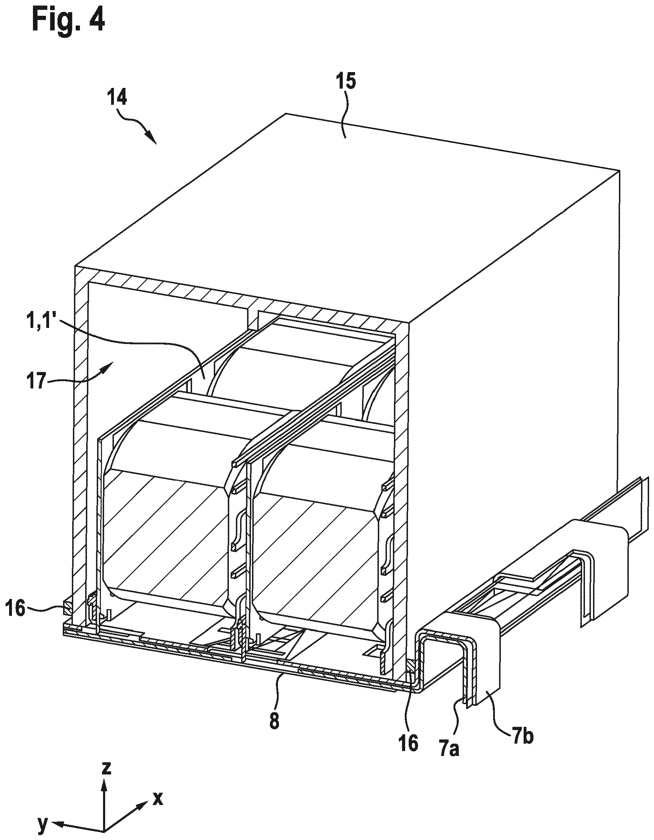

Fig. 4 zeigt eine perspektivische Teilansicht einer Leistungselektronikeinrichtung 14, welche das mit dem Leistungselektronikmodul 8 verbundene Zwischenkreiskondensatormodul 1 sowie ein Deckelelement 15 umfasst, in einem montierten Zustand. Daneben umfasst das Leistungselektronikmodul 8 weitere nicht gezeigte Leistungselektronikkomponenten, welche eine Funktion als Ladeeinrichtung für einen Energiespeicher, als Inverter oder als Gleichspannungswandler realisieren.

Das Deckelelement 15 liegt auf der zweiten Stromschiene 7b auf und ist mittels einer Dichtung 16 dieser gegenüber abgedichtet. Das Deckelelement 15 ist verformbar ausgebildet, so dass ein Druckausgleich ohne Gasaustausch zwischen dem die Wickel 4, 5 aufnehmenden Inneren 17 des Deckelelements und der Umgebung möglich ist.

## Patentansprüche

1. Leistungselektronikeinrichtung (14), umfassend:
ein Zwischenkreiskondensatormodul (1, 1'), bei dem an zwei einander gegenüberliegenden Elektrodenplatten (2a, 2b) ein Wickel (4, 5) elektrisch leitend angebracht ist; und
ein Leistungselektronikmodul (8) mit zumindest zwei Stromschienen (7a, 7b); wobei das Zwischenkreiskondensatormodul (1, 1') mittels einer Steckverbindung mit dem Leistungselektronikmodul (8) verbunden ist;
wobei an jeder Elektrodenplatte (2a, 2b) mehrere erste Verbindungsmittel (6) zur Herstellung der Steckverbindung mit dazu korrespondierenden, an den Stromschienen (7a, 7b) des Leistungselektronikmoduls (8) angebrachten, zweiten Verbindungsmitteln (9a, 9b) vorgesehen sind;
wobei an jeder Stromschiene (7a, 7b) die zweiten Verbindungsmittel (9a, 9b) zur Herstellung der Steckverbindung mit den dazu korrespondierenden, an den Elektrodenplatten (2a, 2b) des Zwischenkreiskondensatormoduls (1, 1') angebrachten, ersten Verbindungsmitteln (6) vorgesehen sind,
**dadurch gekennzeichnet, dass**
nach dem Herstellen der Steckverbindung die zweiten Verbindungsmittel (9a, 9b) verformt worden sind, so dass die Steckverbindung ohne eine Verformung oder Zerstörung der Verbindungsmittel (6, 9a, 9b) nicht mehr lösbar ist.

2. Leistungselektronikeinrichtung (14) nach Anspruch 1, wobei die ersten Verbindungsmittel (6) einstückig mit der Elektrodenplatte (2a, 2b, 3a, 3b) ausgebildet sind.

3. Leistungselektronikeinrichtung (14) nach Anspruch 1 oder 2, wobei die ersten Verbindungsmittel (6) nach Art einer zur Aufnahme eines Kontaktstifts geeigneten Buchse oder Lasche ausgebildet sind.

4. Leistungselektronikeinrichtung (14) nach einem der vorhergehenden Ansprüche, wobei in paralleler Anordnung ein aus den Elektrodenplatten (2a, 2b) gebildetes erstes Elektrodenplattenpaar (2) mit dem dazwischen aufgenommenen ersten Wickel (4) und ein aus zwei weiteren einander gegenüberliegenden Elektrodenplatten (3a, 3b) gebildetes zweites Elektrodenplattenpaar (3) mit einem dazwischen aufgenommenen zweiten Wickel (5) vorgesehen sind.

5. Leistungselektronikeinrichtung (14) nach Anspruch 4, wobei eine erste Elektrodenplatte (2a) des ersten Elektrodenplattenpaars (2) mit einer dritten Elektrodenplatte (3a) des zweiten Elektrodenplattenpaars (3), und eine zweite Elektrodenplatte (2b) des ersten Elektrodenplattenpaars (2) mit einer vierten Elektrodenplatte (3b) des zweiten Elektrodenplattenpaars (3) verbunden ist.

6. Leistungselektronikeinrichtung (14) nach einem der vorhergehenden Ansprüche, wobei die zweiten Verbindungsmittel (9a, 9b) einstückig mit der Stromschiene (7a, 7b) ausgebildet sind.

7. Leistungselektronikeinrichtung (14) nach einem der vorhergehenden Ansprüche, wobei die zweiten Verbindungsmittel (9a, 9b) nach Art eines sich von der Stromschiene (7a, 7b) erstreckenden Kontaktstifts ausgebildet sind, welche reibschlüssig in die ersten Verbindungsmittel (6) einsteckbar sind.

8. Leistungselektronikeinrichtung (14) nach einem der vorhergehenden Ansprüche, wobei eine der Stromschienen (7a, 7b) ein Anschlusselement (11a, 11b) zum Anschluss an eine Versorgungsleitung aufweist.

9. Leistungselektronikeinrichtung (14) nach einem der vorhergehenden Ansprüche, wobei die Leistungselektronikeinrichtung (14) als Ladeeinrichtung für einen elektrischen Energiespeicher, als Inverter oder als Gleichspannungswandler ausgebildet ist.

10. Leistungselektronikeinrichtung (14) nach einem der vorhergehenden Ansprüche, ferner umfassend ein, insbesondere verformbares, Deckelelement (15), welches die Wickel (4, 5) gasdicht einhaust.

11. Leistungselektronikeinrichtung (14) nach Anspruch 10, ferner umfassend ein das Deckelelement (15) gegenüber einer Stromschiene (7a, 7b) abdichtendes Dichtelement (16).

## Claims

1. Power electronics device (14), comprising:
a link circuit capacitor module (1, 1'), in which a coil (4, 5) is electrically conductively mounted on two electrode plates (2a, 2b) which are opposite one another; and
a power electronics module (8) comprising at least two busbars (7a, 7b);
wherein the link circuit capacitor module (1, 1') is connected to the power electronics module (8) by means of a plug connection;
wherein a plurality of first connecting means (6) for producing the plug connection to corresponding second connecting means (9a, 9b) mounted on the busbars (7a, 7b) of the power electronics module (8) are provided on each electrode plate (2a, 2b);
wherein the second connecting means (9a, 9b) for producing the plug connection to the corresponding first connecting means (6) mounted on the electrode plates (2a, 2b) of the link circuit capacitor module (1, 1') are provided on each busbar (7a, 7b),
**characterized in that**
the second connecting means (9a, 9b) have been deformed after the production of the plug connection such that the plug connection is no longer releasable without deformation or destruction of the connecting means (6, 9a, 9b).

2. Power electronics device (14) according to Claim 1, wherein the first connecting means (6) are formed in one piece with the electrode plate (2a, 2b, 3a, 3b).

3. Power electronics device (14) according to Claim 1 or 2, wherein the first connecting means (6) are formed in the manner of a socket or lug which is suitable for receiving a contact pin.

4. Power electronics device (14) according to any one of the preceding claims, wherein a first electrode plate pair (2) formed from the electrode plates (2a, 2b) and having the first coil (4) held between said electrode plates and a second electrode plate pair (3) formed from two further electrode plates (3a, 3b) which are opposite one another and having a second coil (5) held between said electrode plates are provided in a parallel arrangement.

5. Power electronics device (14) according to Claim 4, wherein a first electrode plate (2a) of the first electrode plate pair (2) is connected to a third electrode plate (3a) of the second electrode plate pair (3) and a second electrode plate (2b) of the first electrode plate pair (2) connected to a fourth electrode plate (3b) of the second electrode plate pair (3).

6. Power electronics device (14) according to any one of the preceding claims, wherein the second connecting means (9a, 9b) are formed in one piece with the busbar (7a, 7b).

7. Power electronics device (14) according to any one of the preceding claims, wherein the second connecting means (9a, 9b) are formed in the manner of a contact pin which extends from the busbar (7a, 7b), the second connecting means being able to be plugged into the first connecting means (6) in a frictionally engaged manner.

8. Power electronics device (14) according to any one of the preceding claims, wherein one of the busbars (7a, 7b) has a connection element (11a, 11b) for connection to a supply line.

9. Power electronics device (14) according to any one of the preceding claims, wherein the power electronics device (14) is formed as a charging device for electrical energy store, as an inverter or as a DC-DC converter.

10. Power electronics device (14) according to any one of the preceding claims, further comprising an, in particular deformable, cover element (15) which houses the coils (4, 5) in a gas-tight manner.

11. Power electronics device (14) according to Claim 10, further comprising a sealing element (16) which seals the cover element (15) with respect to a busbar (7a, 7b).

## Revendications

1. Dispositif d'électronique de puissance (14), comprenant :
un module de condensateur de circuit intermédiaire (1, 1') dans lequel un enroulement (4, 5) est placé de manière électriquement conductrice sur deux plaques d'électrode (2a, 2b) opposées l'une à l'autre ; et
un module d'électronique de puissance (8) pourvu d'au moins deux barres conductrices (7a, 7b) ;
le module de condensateur de circuit intermédiaire (1, 1') étant relié au module d'électronique de puissance (8) au moyen d'une liaison enfichable ;
dans lequel, sur chaque plaque d'électrode (2a, 2b), plusieurs premiers moyens de liaison (6) servant à établir la liaison enfichable avec des deuxièmes moyens de liaison (9a, 9b) correspondants et placés sur les barres conductrices (7a, 7b) du module d'électronique de puissance (8) sont prévus ;
dans lequel, sur chaque barre conductrice (7a, 7b), les deuxièmes moyens de liaison (9a, 9b) servant à établir la liaison enfichable avec les premiers moyens de liaison (6) correspondants et placés sur les plaques d'électrode (2a, 2b) du module de condensateur de circuit intermédiaire (1, 1') sont prévus,
**caractérisé en ce que** les deuxièmes moyens de liaison (9a, 9b) ont été déformés après l'établissement de la liaison enfichable de sorte que la liaison enfichable ne peut plus être défaite sans déformation ou destruction des moyens de liaison (6, 9a, 9b).

2. Dispositif d'électronique de puissance (14) selon la revendication 1, dans lequel les premiers moyens de liaison (6) sont réalisés d'un seul tenant avec la plaque d'électrode (2a, 2b, 3a, 3b) .

3. Dispositif d'électronique de puissance (14) selon la revendication 1 ou 2, dans lequel les premiers moyens de liaison (6) sont réalisés à la manière d'une prise ou d'une languette conçue pour recevoir une fiche de contact.

4. Dispositif d'électronique de puissance (14) selon l'une quelconque des revendications précédentes, dans lequel, dans un agencement parallèle, une première paire de plaques d'électrode (2) composée des plaques d'électrode (2a, 2b) avec le premier enroulement (4) reçu entre celles-ci, et une deuxième paire de plaques d'électrode (3) composée de deux autres plaques d'électrode (3a, 3b) opposées l'une à l'autre avec un deuxième enroulement (5) reçu entre celles-ci sont prévues.

5. Dispositif d'électronique de puissance (14) selon la revendication 4, dans lequel une première plaque d'électrode (2a) de la première paire de plaques d'électrode (2) est reliée à une troisième plaque d'électrode (3a) de la deuxième paire de plaques d'électrode (3), et une deuxième plaque d'électrode (2b) de la première paire de plaques d'électrode (2) est reliée à une quatrième plaque d'électrode (3b) de la deuxième paire de plaques d'électrode (3).

6. Dispositif d'électronique de puissance (14) selon l'une quelconque des revendications précédentes, dans lequel les deuxièmes moyens de liaison (9a, 9b) sont réalisés d'un seul tenant avec la barre conductrice (7a, 7b) .

7. Dispositif d'électronique de puissance (14) selon l'une quelconque des revendications précédentes, dans lequel les deuxièmes moyens de liaison (9a, 9b) sont réalisés à la manière d'une fiche de contact s'étendant à partir de la barre conductrice (7a, 7b) et peuvent être enfichés par friction dans les premiers moyens de liaison (6) .

8. Dispositif d'électronique de puissance (14) selon l'une quelconque des revendications précédentes, dans lequel l'une des barres conductrices (7a, 7b) présente un élément de connexion (11a, 11b) pour la connexion à une ligne d'alimentation.

9. Dispositif d'électronique de puissance (14) selon l'une quelconque des revendications précédentes, le dispositif d'électronique de puissance (14) étant réalisé sous la forme d'un dispositif de charge pour un accumulateur d'énergie électrique, d'un onduleur ou d'un convertisseur continu-continu.

10. Dispositif d'électronique de puissance (14) selon l'une quelconque des revendications précédentes, comprenant en outre un élément de couvercle (15), en particulier déformable, qui loge les enroulements (4, 5) de manière étanche au gaz.

11. Dispositif d'électronique de puissance (14) selon la revendication 10, comprenant en outre un élément d'étanchéité (16) rendant l'élément de couvercle (15) étanche par rapport à une barre conductrice (7a, 7b).
